# EUROPÄISCHE PATENTSCHRIFT

(11) **EP 3 871 918 B1**
(45) Veröffentlichungstag und Bekanntmachung des Hinweises auf die Patenterteilung: **31.07.2024**
(21) Anmeldenummer: 21154313.7
(22) Anmeldetag: 29.01.2021
(51) Int. Cl.: B60K 37/00

(54) **BEDIENEINRICHTUNG**
OPERATING DEVICE
DISPOSITIF DE COMMANDE

(30) Priorität: 26.02.2020 DE 102020202478
(43) Veröffentlichungstag der Anmeldung: 01.09.2021
(73) Patentinhaber: Albert Ziegler GmbH, 89537 Giengen a. d. Brenz (DE)
(72) Erfinder: Boden, Ingo, 89129 Langenau (DE); Quintenz, Tobias, 89275 Elchingen (DE)
(74) Vertreter: Patentanwälte Magenbauer & Kollegen Partnerschaft mbB

(56) Entgegenhaltungen:
- DE-A1- 102015 101 740
- US-B1- 10 000 268

## Beschreibung

Die Erfindung betrifft eine Bedieneinrichtung zur Bedienung von Funktionseinheiten, insbesondere auf dem Gebiet der BOS-Fahrzeuge, mit einem Bedieneinheitträger, indem eine mittels einer Hinterleuchtungseinrichtung hinterleuchtbare Bedieneinheit, beispielsweise Tastenfeld angeordnet ist, wobei die Bedieneinheit mehrere Bedienfelder aufweist, die jeweils zu einer Bedienfeldeinheit gehören und jeweils einer bestimmten Funktion einer zugeordneten Funktionseinheit zugeordnet sind, wobei jede Bedienfeldeinheit eine durch Betätigung des zugeordneten Bedienfelds betätigbare Schaltstruktur aufweist, um die Funktion der zugeordneten Funktionseinheit zu aktivieren.

Derartige Bedienfelder sind seit langem bekannt und werden auch auf dem Gebiet der BOS-Fahrzeuge (BOS: Behörden und Organisationen mit Sicherheitsaufgaben) seit langem eingesetzt. Auf diesem Gebiet ist es von Vorteil, wenn verschiedene Funktionseinheiten beispielsweise eines Einsatzfahrzeuges von einer zentralen Bedieneinrichtung, beispielsweise Bedienkonsole, aus bedient werden können. Zu den Funktionseinheiten können beispielsweise eine an Bord befindliche Einbaupumpe, Werfer, Schaumzumischeinrichtungen oder Beleuchtungseinrichtungen gehören.

Oft ist es für den Bediener insbesondere in der Stresssituation eines Einsatzes schwierig, den Überblick über die Vielzahl von Bedienfeldern einer Bedieneinrichtung zu halten. Um eine optimale Bedienreihenfolge der verschiedenen Bedienfelder einhalten zu können, wodurch die Funktionseinheiten nacheinander in der günstigsten Reihenfolge aktiviert werden, bedarf es Übung und Training.

Das Dokument DE 10 2015 101740 A1 offenbart eine Bedienkonsole in einem Kraftfahrzeug mit einer aus einem im Wesentlichen lichtundurchlässigen Material bestehenden Blende. Die Blende weist mindestens einen Bedienbereich und mindestens einen Visualisierungsbereich in Form mindestens einer Aussparung oder mindestens eines lichtdurchlässigen Bereichs auf. Einem jeden Bedienbereich oder einem jeden Visualisierungsbereich ist mindestens eine Beleuchtungsstelle zugeordnet ist, die mindestens eine Leuchtdiode aufweist. Diese Leuchtdiode ist eine RGB-Leuchtdiode. Die Beleuchtungsstellen der Blende sind elektrisch in einer Matrixstruktur angebunden. Diese Anbindung in einer Matrixstruktur erfolgt in der Weise, so dass eine jede der Beleuchtungsstellen einzeln und individuell oder eine Mehrzahl der Beleuchtungsstellen gemeinsam von einer elektronischen Steuereinheit in der Weise ansteuerbar sind, dass die Farbe und die Helligkeit einer jeden der Beleuchtungsstellen einzeln und individuell oder eine Mehrzahl der Beleuchtungsstellen gemeinsam in ihrer Helligkeit und Ihrer Farbe einstellbar sind.

Aufgabe der Erfindung ist es daher, eine Bedieneinrichtung der eingangs erwähnten Art zu schaffen, die den Bediener bei der Steuerung der verschiedenen Funktionseinheiten unterstützt.

Diese Aufgabe wird durch eine Bedieneinrichtung mit den Merkmalen des unabhängigen Anspruchs 1 gelöst. Weiterbildungen der Erfindung sind in den Unteransprüchen dargestellt.

Die Bedieneinrichtung gibt dem Benutzer bzw. Bediener eine einfach zu verstehende Menüführung an die Hand, bei der nur diejenigen Bedienfelder aufleuchten bzw. hinterleuchtet sind, deren zugeordnete Funktionseinheiten mittels Betätigung des Bedienfeldes aktiviert werden sollen. Andere Bedienfelder, die anderen Funktionseinheiten zugeordnet sind, erscheinen zunächst einmal auf der Bedieneinheit nicht. Ein weiterer Aspekt ist, dass das Bedienfeld nach dessen Aktivierung in einer anderen Anzeigefarbe hinterleuchtet ist, als im zuvor nicht aktivierten Bereitschaftszustand. Auch dies hilft dem Bediener. Ein weiterer wichtiger Aspekt ist, dass nach Betätigung eines Bedienfeldes zur Aktivierung einer bestimmten Funktionseinheit weitere Bedienfelder auf der Bedieneinheit erscheinen, wodurch weitere Funktionseinheiten aktiviert werden können. Insgesamt ergibt sich für den Bediener die Möglichkeit einer einfachen und komfortablen Bedienung der Bedieneinrichtung. Die Menüführung leitet den Bediener und gibt ihm eine Betätigungsreihenfolge vor.

Der Bereitschaftszustand des Bedienfeldes repräsentiert einem Bereitschaftszustand der zugeordneten Funktionseinheit. Der aktivierte Zustand des Bedienfeldes repräsentiert den aktivierten Zustand oder Betriebsmodus der zugeordneten Funktionseinheit. Der Bedieneinheitträger kann ein Gehäuse sein, in dem die Bedieneinheit aufgenommen ist oder ein Armaturenbrett sein, an dem die Bedieneinheit befestigt ist. Die Bedieneinheit kann als Tastenfeld ausgebildet sein.

Erfindungsgemäss ist die elektronische Steuereinrichtung derart ausgebildet, dass bei Betätigung eines im Bereitschaftszustand befindlichen einer bestimmten Funktion zugeordneten Bedienfelds und bei Nichtauftreten einer Fehlfunktion ein einzelnes bisher unhinterleuchtetes Bedienfeld hinterleuchtet ist, dass der logisch nächsten, der Funktion des betätigten Bedienfelds folgenden Funktion zugeordnet ist oder mehrere bisher unhinterleuchtete Bedienfelder als Auswahl hinterleuchtet sind. Dadurch wird dem Bediener eine Betätigungsreihenfolge vorgegeben, die je nach Einsatzzweck auf eine optimale Bedienreihenfolge der Funktionseinheiten abgestimmt ist.

Bei einer Weiterbildung der Erfindung ist die elektronische Steuereinrichtung derart ausgebildet, dass der Hinterleuchtungsvorgang der Bedienfelder im Bereitschaftszustand pulsierend erfolgt. Dies ist eine weitere Unterstützung des Bedieners in der Art, dass das Pulsieren anzeigt, das hier ein Bedienfeld zur Bedienung bereit ist.

In besonders bevorzugter Weise ist die elektronische Steuereinrichtung derart ausgebildet, dass der Hinterleuchtungsvorgang der Bedienfelder während der Betätigung insbesondere schnell blinkend mit einer höheren Frequenz als das Pulsieren im Bereitschaftszustand oder mittels einer Dauerhinterleuchtung erfolgt.

Bei einer Weiterbildung der Erfindung erfolgt der Hinterleuchtungsvorgang zunächst blinkend, wodurch die Anforderung der dem Bedienfeld zugeordneten Funktion angezeigt ist und danach mittels Dauerhinterleuchtung, wodurch die Ausführung der Funktion angezeigt ist.

Bei einer Weiterbildung der Erfindung sind die Funktionseinheiten ausgewählt aus der Gruppe bestehend aus Pumpeneinrichtung, Schaumeinrichtung, Werfereinrichtung und Beleuchtungseinrichtung, beispielsweise Lichtmast und dessen Steuerung.

Die Gruppe ist allerdings nicht abschließend, sondern es sind noch weitere mittels der Bedieneinrichtung steuerbare Funktionseinheiten denkbar.

Es ist möglich, dass die Hinterleuchtungseinheiten der Bedienfeldeinheiten jeweils wenigstens ein Leuchtelement aufweisen, das mittels der elektronischen Steuereinrichtung derart ansteuerbar ist, dass Licht in unterschiedlichen Anzeigefarben emittierbar ist. Die Betätigung des Bedienfeldes kann über die elektronische Steuereinrichtung einen Schaltvorgang wenigstens eines Leuchtelements auslösen, wodurch die Anzeigefarbe gewechselt wird.

In besonders bevorzugter Weise ist das wenigstens eine Leuchtelement als LED-Einheit, insbesondere RGB-LED, ausgebildet ist.

Bei einer Weiterbildung der Erfindung weist die elektronische Steuereinrichtung eine am Bedieneinheitträger angeordnete Platine auf, die den Bedienfeldeinheiten derart zugeordnet ist, dass bei Betätigung des ausgewählten Bedienfeldes eine Kontaktierung der Platine mittels zu den jeweiligen Bedienfeldeinheiten gehörenden Kontaktierungsmitteln erfolgt.

In besonders bevorzugter Weise weisen die Kontaktierungsmittel ein unterhalb der Bedieneinheit angeordnetes Tastelement oder Taster auf, das bei Betätigung des Bedienfeldes in Richtung Platine verlagerbar ist und dort eine Kontaktierung auslöst. Derartige Taster haben gegenüber einer "Touch"-Bedienung insbesondere auf dem Gebiet der Feuerwehrtechnik mehrere Vorteile. Der Taster gibt eine taktile Rückmeldung über die Betätigung des Bedienfeldes. Ferner lässt sich ein Taster-Bedienfeld auch ohne Weiteres mit Handschuhen bedienen, was insbesondere auf dem Gebiet der Feuerwehrtechnik von großem Vorteil ist.

Bei einer Weiterbildung der Erfindung weist das Tastelement einen lichtdurchlässigen Tastkopf und eine der Platine zugewandten Tastkörper auf.

In besonders bevorzugter Weise weist der Tastkopf wenigstens eine Streuscheibe auf, wodurch das von dem wenigstens einen Leuchtelement emitierte Licht gestreut und daher eine optimale Hinterleuchtung des Bedienfeldes erzeugt wird. Es ist beispielsweise möglich zwei übereinander angeordnete Streuscheiben vorzusehen, von denen insbesondere die untere weiß und die obere grau bedruckt oder grau eingefärbt ist. Alternativ ist es denkbar, die grau bedruckte oder grau eingefärbte Streuscheibe durch eine eingefärbte Trägerschicht zu ersetzen.

In besonders bevorzugter Weise sind mehrere Bedienfeldeinheiten in einem Bedienfeldeinheiten-Modul zusammengefasst, das als vormontierbare Baugruppe ausgebildet und am Gehäuse der Bedieneinrichtung montiert ist.

Bei einer Weiterbildung der Erfindung weist die Bedieneinheit wenigstens eine lichtundurchlässige, vorzugsweise schwarze oder graue Abdeckschicht auf.

Es ist möglich, dass die Bedieneinheit wenigstens eine transparente Trägerschicht aufweist, die auf der wenigstens einen Abdeckschicht angeordnet ist. Vorzugsweise ist die Trägerschicht als Folie ausgebildet.

In besonders bevorzugter Weise ist die wenigstens eine Abdeckschicht auf die Trägerschicht aufgedruckt, auf laminiert oder als Folie ausgebildet.

Zweckmäßigerweise wird im Falle einer Abdeckschicht-Folie und/oder Trägerschicht-Folie die Folie mittels Klebemitteln auf zugeordnete Teile des Bedieneinheitträgers appliziert.

Die Erfindung umfasst ferner ein Einsatzfahrzeug, insbesondere Feuerwehrfahrzeug, gekennzeichnet durch wenigstens eine Bedieneinrichtung nach einem der Ansprüche 1 bis 16.

Ein bevorzugtes Ausführungsbeispiel der Erfindung ist in der Zeichnung dargestellt und wird im Folgenden näher erläutert.

In der Zeichnung zeigen:
- Figur 1: eine schematische Darstellung eines bevorzugten Ausführungsbeispiels der erfindungsgemäßen Bedieneinrichtung mit einem Bedienfeld im Bereitschaftszustand,
- Figur 2: eine schematische Darstellung der Bedieneinrichtung von Figur 1 mit zwei hinterleuchtenden Bedienfeldern, wobei ein Bedienfeld im aktivierten Zustand und ein anderes Bedienfeld im Bereitschaftszustand ist,
- Figur 3: eine schematische Darstellung der Bedieneinrichtung von Figur 1 und 2, wobei vier hinterleuchtete Bedienfelder vorhanden sind, von denen zwei im aktivierten Zustand und zwei im Bereitschaftszustand sind,
- Figur 4: eine schematische Darstellung der Bedieneinrichtung von Figur 1 bis 3, wobei drei Bedienfeldeinheiten im aktivierten Zustand sind, eine Bedienfeldeinheit im Bereitschaftszustand ist und eine Bedienfeldeinheit eine Fehlfunktion anzeigt,
- Figur 5: einen Längsschnitt durch die Bedienfeldeinheit aus Figur 2 entlang der Linie V-V, wobei die Bedienfeldeinheiten und zugehörige Komponenten schematisch dargestellt sind.

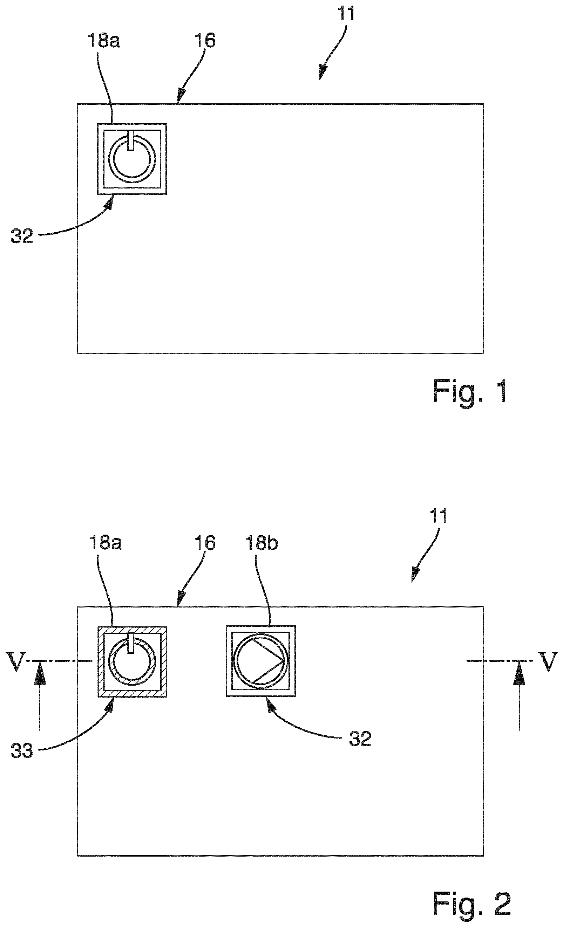

Die Figuren 1 bis 5 zeigen ein bevorzugtes Ausführungsbeispiel der erfindungsgemäßen Bedieneinrichtung 11. Die Bedieneinrichtung 11 wird im Folgenden beispielhaft beim Einsatz in einem BOS-Fahrzeug beschrieben. Die Bedieneinrichtung 11 ist jedoch nicht auf dieses Einsatzgebiet beschränkt. Im Falle des Einsatzes in der Feuerwehrtechnik kann sich eine solche Bedieneinrichtung 11 beispielsweise an Bord eines Einsatzfahrzeuges, z. B. Rettungswagen, THW-, DLRG-, Katastrophenschutz- und Polizeifahrzeuge, befinden. Beispielsweise wäre es möglich, eine derartige Bedieneinrichtung 11 als zentrale Bedienkonsole in der Fahrerkabine eines solchen Einsatzfahrzeuges anzuordnen. Jedoch wäre selbstverständlich auch eine Anordnung am Heckbereich eines solchen Einsatzfahrzeuges, beispielsweise in der Nähe einer Einbaupumpe, denkbar.

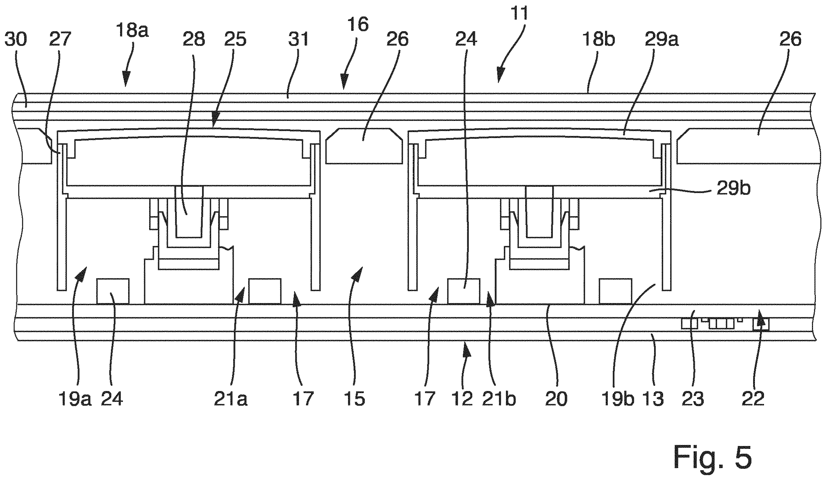

Der Aufbau einer derartigen Bedieneinrichtung 11 ist in Figur 5 beispielhaft gezeigt.

Die Bedieneinrichtung 11 besitzt einen Bedieneinheitträger 12, beispielsweise in Form eines Gehäuses, der beispielhaft in rechteckiger Grundform dargestellt ist. Der Bedieneinheitträger 12 kann aus Metall- oder Kunststoffmaterial bestehen.

Wie insbesondere in Figur 5 gezeigt, besitzt der Bedieneinheitträger 12 einen Boden 13 und eine Wand (nicht dargestellt), die im Beispielsfall durch vier Wandabschnitte (nicht dargestellt) gebildet ist. Die Wand und der Boden 13 umschließen gemeinsam einen Innenraum 15. Der Bedieneinheitträger 12 ist nach oben offen und wird oberseitig von einer Bedieneinheit 16 abgeschlossen, die in nachfolgend noch näher erläuternder Weise an dem Bedieneinheitträger 12 befestigt ist.

Im Innenraum 15 ist eine Hinterleuchtungseinrichtung 17 angeordnet, mittels der die Bedieneinheit 16 hinterleuchtbar ist.

Die Wand besitzt eine gegenüber deren Oberkante zurückgesetzte umlaufende, stegartig ausgebildete Montageleiste (nicht dargestellt), die zur Befestigung nachfolgend näher bezeichnete Komponenten der Bedieneinrichtung 11 dient.

Wie insbesondere in den Figuren 1 bis 4 gezeigt, besitzt die Bedieneiheit 16 mehrere Bedienfelder 18a-e, die jeweils zu einer Bedienfeldeinheit 19a-e gehören und jeweils einer bestimmten Funktion einer zugeordneten Funktionseinheit zugeordnet sind.

Im Beispielsfall Bedieneinrichtung 11 an Bord eines Einsatzfahrzeuges kommt eine Vielzahl von Funktionseinheiten in Frage, die mittels zugeordneter Bedienfelder 18a-e aktiviert werden können. Als Funktionseinheiten sind beispielsweise zu nennen eine Pumpeneinrichtung, insbesondere aufweisend eine an Bord des Einsatzfahrzeugs eingebaute Einbaupumpe, eine Schaumeinrichtung insbesondere mit einer einem Schaumtank zugeordneten Additiv- oder Dosierpumpe, eine Werfereinrichtung mit wenigstens einen Werfer, eine Beleuchtungseinrichtung, insbesondere mit wenigstens einem Lichtmast und daran angeordneten Scheinwerfern und so weiter.

Im Folgenden wird die Bedieneinrichtung 11 rein beispielhaft an Hand dreier unterschiedlichen Funktionseinheiten beschrieben, nämlich der an Bord des Einsatzfahrzeugs befindlichen Einbaupumpe, der ebenfalls an Bord des Einsatzfahrzeugs befindlichen Schaumeinrichtung und einer ebenfalls an Bord des Einsatzfahrzeugs befindlichen Werfereinrichtung.

Die Bedienfeldeinheiten 19a-e mit den jeweiligen Bedienfeldern 18a-e weisen jeweils eine durch Betätigung des zugeordneten Bedienfelds 18a-e betätigbare Schaltstruktur 20 auf, um die Funktion der zugeordneten Funktionseinheiten zu aktivieren.

Wie insbesondere in Figur 5 gezeigt, weist die Hinterleuchtungseinrichtung 17 mehrere jeweils zu einer der Bedienfeldeinheiten 19a-e gehörende Hinterleuchtungseinheiten 21a-e auf, durch die jeweils das zugeordnete Bedienfeld 18a-e mit mehreren unterschiedlichen Anzeigefarben hinterleuchtbar ist.

Die Figur 5 zeigt schematisch den Aufbau der Hinterleuchtungseinheiten 21a-e und der elektronischen Steuereinrichtung 22. Die elektronische Steuereinrichtung 22 besitzt eine im Bereich des Bodens 13 angeordnete Platine 23 mit darauf angeordneter Schaltstruktur (nicht dargestellt).

Die Hinterleuchtungseinheiten 21a-e weisen jeweils wenigstens ein Leuchtelement 24 auf, das mittels der elektronischen Steuereinrichtung 22 derart ansteuerbar ist, dass Licht mit unterschiedlichen Anzeigefarben emittierbar ist. Die Leuchtelemente 24 sind beispielhaft in Form von LED-Einheiten gezeigt. Im Beispielsfall sind die LED-Einheiten als RGB-LED's ausgebildet. Je nach Ansteuerung sind die RGB-LED's in der Lage rotes, gelbes und blaues Licht oder Mischungen hiervon, d.h. weißes, grünes, oranges und violettes Licht zur Verfügung zu stellen.

Die RGB-LED's sind auf der Platine 23 angeordnet.

Die Bedienfeldeinheiten 19a-e weisen ferner Kontaktierungsmittel zur Kontaktierung der Platine 23 bei Betätigung der zugeordneten Bedienfelder 18a-e auf. Die Kontaktierungsmittel weisen ein unterhalb der Bedieneinheit 16 angeordnetes Tastelement 25 auf. Das Tastelement 25 ist an einem Tastelementträger 26, der ebenfalls zur Bedienfeldeinheit 19a-e gehört, beweglich geführt. Das Tastelement 25 besitzt einen lichtdurchlässigen Tastkopf 26, der auch als Tastkappe bezeichnet werden kann und einem der Platine 23 zugewandten Tastkörper 28.

Wie insbesondere in der Figur 5 gezeigt, besitzt der Tastkopf 27 die Form einer Hülse, beispielsweise mit quadratischem, rechteckigem oder rundem Querschnitt. Der Tastkopf 27 ist seitlich an dem Tastelementträger 26 geführt. An dem Tastkopf 27 ist wenigsten eine Streuscheibe 29a, 29b gelagert. Im gezeigten Beispielsfall sind zwei übereinander angeordnete Streuscheiben 29a, 29b vorgesehen, von denen die untere weiß und die obere grau bedruckt oder grau eingefärbt ist. Der Tastkörper 28 ist an der unteren Streuscheibe 29b angeordnet und ragt von dort nach unten in Richtung Platine 23.

Zweckmäßigerweise sind die Bedienfeldeinheiten 19a-e in einem Bedienfeldeinheiten-Modul (nicht dargestellt) zusammengefasst, wobei das Modul ein Modulgehäuse aufweist, das für mehrere Bedienfeldeinheiten den Tastelementträger 26 für die Tastelemente 25 bildet. In dem Bedienfeldeinheiten-Modul können beispielsweise zwei, vier oder sechs Bedienfeldeinheiten 19a-e untergebracht sein. Zweckmäßigerweise sind an dem Bedieneinheitträger 12 der Bedieneinrichtung 11 mehrere solcher Bedienfeldeinheiten-Module befestigt, insbesondere an der stegartigen Randleiste des Gehäuses 12 angeschraubt.

Wie ferner in Figur 5 gezeigt, besitzt die Bedieneinheit 16 wenigstens eine lichtdurchlässige im Beispielsfall schwarze oder graue Abdeckschicht 30. Es ist möglich, mehrere Abdeckschichten übereinander anzuordnen.

Ferner besitzt das Bedieneinheit 16 wenigstens eine transparente Trägerschicht in Form einer Trägerfolie. Zweckmäßigerweise ist die wenigstens eine Abdeckschicht 30 auf die Trägerfolie aufgedruckt oder auflaminiert.

Die Bedienfelder 18a-e sind auf der wenigstens einen Abdeckschicht 30 dadurch ausgebildet, dass sie durch lichtdurchlässige Bereiche der ansonsten lichtundurchlässigen Abdeckschicht 30 herausgebildet sind. Die Bedienfelder 18a-e sind dabei so angeordnet, dass sie positionsgenau oberhalb des zugeordneten Tastelements 25 angeordnet sind. Der Verbund aus Trägerfolie 31 und aufgedruckter Abdeckschicht 30 ist mittels eines Klebers auf die Oberseite der Bedienfeldeinheit-Module appliziert.

Ein wesentlicher Aspekt der erfindungsgemäßen Bedienungseinrichtung 11 ist die Menüführung der Bedienfelder 18a-e auf der Bedieneinheit 16.

Die Figur 1 zeigt hier beispielhaft den Ausgangszustand bzw. Urzustand der Bedieneinrichtung 11. In diesem Zustand ist nur ein einziges der zahlreichen Bedienfelder 18a hinterleuchtet und daher auf der Bedieneinheit 16, die auch als Tastenfeld bezeichnet werden könnte, sichtbar, während die anderen Bedienfelder 18b-e nicht hinterleuchtet sind und daher auf der Bedieneinheit 16 nicht sichtbar sind. Die Aufmerksamkeit des Bedieners wird also gezielt auf das einzige hinterleuchtete Bedienfeld 18a gerichtet. Im gezeigten Beispielsfall erscheint auf der Bedieneinheit 16 lediglich das Bedienfeld 18a mit dem Symbol Ein-/Aus auf. Ein wesentlicher Aspekt der Erfindung ist, dass die Bedienfelder derart hinterleuchtet sind, dass unterschiedliche Zustände der zugeordneten Funktionseinheiten angezeigt werden.

Die Figur 1 zeigt also einen unbetätigten Grundzustand der Bedieneinrichtung 11, in der das einzig sichtbare Bedienfeld 18a mittels einer einen Bereitschaftszustand 32 des Bedienfeldes 18a, das den Bereitschaftszustand der zugeordneten Funktionseinheit oder zugeordneten Funktion repräsentiert, anzeigenden Anzeigefarbe hinterleuchtet ist. Im Beispielsfall ist für den Bereitschaftszustand 32 die Anzeigefarbe "weiß" gewählt. Dies ist ohne Weiteres dadurch erzielbar, dass die RGB-LED's der dem Bedienfeld zugeordnete Hinterleuchtungseinheit jeweils aktiviert sind und die Farbmischung rot, grün und blau dann die Anzeigefarbe weiß ergibt. Zweckmäßigerweise erfolgt der Hinterleuchtungsvorgang des Bedienfeldes 18a im Bereitschaftszustand 32 pulsierend, was die Aufmerksamkeit für den Bediener nochmals erhöht.

Betätigt der Bediener nun das einzige auf dem Display 16 erscheinende Bedienfeld 18a so werden zwei Vorgänge ausgelöst. Das betätigte Bedienfeld 18a, also im Beispielsfall die Funktion "Ein" wechselt nun die Anzeigefarbe und zusätzlich taucht wenigstens ein weiteres Bedienfeld 18b auf der Bedieneinheit 16 auf, wird also hinterleuchtet, das bisher auf der Bedieneinheit 16 nicht sichtbar war. Im gezeigten Beispielsfall folgt auf die Betätigung des ersten Bedienfeldes 18a lediglich ein weiteres einzelnes Bedienfeld 18b, das eine sinnvolle und optimierte Bedienreihenfolge vorgibt, d.h. das logisch nächste zu bedienende Bedienfeld 18b erscheint auf der Bedieneinheit 16. Im Beispielsfall ist dies das Bedienfeld das der Funktionseinheit Pumpe zugeordnet ist.

Bei der Aktivierung des ersten Bedienfeldes 18a, also der Aktivierung der "Ein"-Funktion per Tastendruck verlagert sich das Tastelement 25 in Richtung Platine 23, wodurch der Tastkörper 28 einen Schaltvorgang auslöst, wodurch es zu einem Farbwechsel der Anzeigefarbe kommt, wodurch nicht mehr ein Bereitschaftszustand 33 sondern ein aktivierter Zustand 33 angezeigt ist. Im Beispielsfall ist die Anzeigefarbe für die aktivierten Zustand "grün"(In den Figuren durch Schraffur dargestellt) Dies lässt sich auch ohne Weiteres über eine elektronische Ansteuerung der RGB-LED's und Deaktivierung der roten LED erzielen.

Zweckmäßigerweise erfolgt der Hinterleuchtungsvorgang nach dem Farbumschlag von "weiß" zu "grün" zunächst blinkend, wodurch die Anforderung der dem Bedienfeld 18a zugeordneten Funktion angezeigt ist und danach mittels Dauerhinterleuchtung, wodurch die Ausführung der Funktion der zugeordneten Funktionseinheit angezeigt ist.

Wie beispielhaft in Figur 2 gezeigt, wechselt das erste Bedienfeld 18a nach dessen Aktivierung von "weiß" auf "grün", wodurch für den Bediener klar erkennbar ist, dass die "Ein"-Funktion aktiviert ist. Das auf der Bedieneinheit 16 erschienene zweite Bedienfeld 18b befindet sich zunächst im Bereitschaftszustand 32, wird also mit der Anzeigefarbe "weiß" hinterleuchtet. Auch hier kann zusätzlich ein Pulsieren erfolgen.

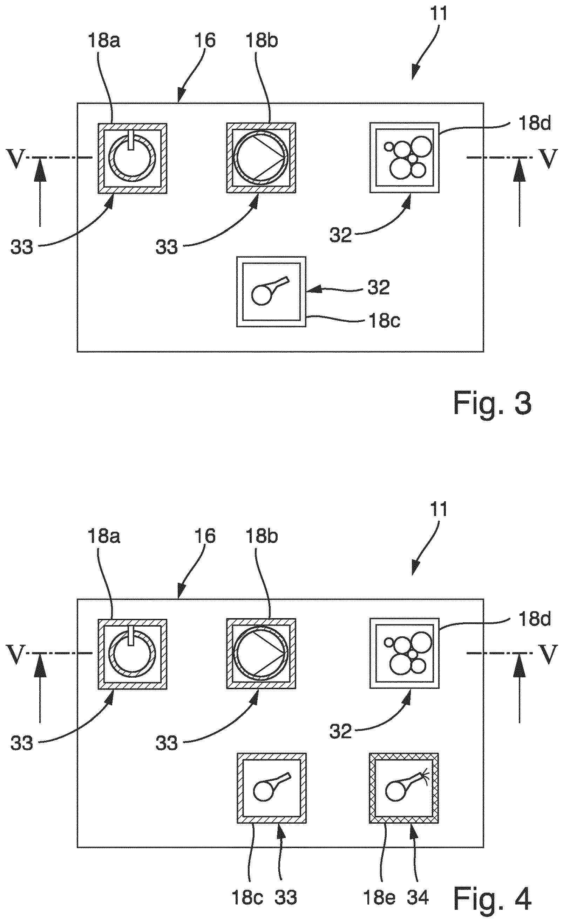

Bei Betätigung des zweiten Bedienfeldes 18b mittels Tastendruck wechselt die Anzeigefarbe dieses Bedienfeldes von "weiß" auf "grün" zunächst blinkend und dann dauerhinterleuchtet. Zusätzlich hierzu werden, wie insbesondere in Figur 3 gezeigt, weitere Bedienfelder 18c, d, die zuvor auf der Bedieneinheit 16 nicht sichtbar waren, hinterleuchtet. Im gezeigten Beispielsfall tauchen zwei weitere Bedienfelder 18c, d auf, die beispielhaft der Funktionseinheit Schaumeinrichtung und der Funktionseinheit Werfereinrichtung zugeordnet sind. Der Grund, warum hier gleichzeitig zwei weitere Bedienfelder 18c und d auftauchen und nicht lediglich ein einzelnes Bedienfeld liegt in der Tatsache, dass hier das eine Bedienfeld keinen Vorrang vor dem anderen Bedienfeld hat. Im Falle des in Figur 2 gezeigten Bedienfeldes 18b beispielhaft in Form der Funktionseinheit Pumpe ist es logisch, dass zunächst die Pumpe aktiviert werden muss, bevor Wasser oder ein Wasser-/Schaumgemisch aus dem Werfer austreten kann.

Die beiden weiteren Bedienfelder 18c und d werden zunächst wieder mit der Anzeigefarbe "weiß" hinterleuchtet, was in diesem Fall wieder den Bereitschaftszustand 32 repräsentiert.

Die Figur 4 zeigt beispielhaft eine weitere Variante der Bedienreihenfolge. In diesem Fall wurde das dritte Bedienfeld 18c, das der Werfereinheit zugeordnet ist, per Tastendruck aktiviert, wodurch ein Farbumschlag von der Anzeigefarbe "weiß" auf "grün" erfolgte. Gleichzeitig taucht dann ein fünftes Bedienfeld 18e auf der Bedieneinheit 16 auf, das jedoch im Gegensatz zu der vorher beschriebenen Bedienfeldern rein beispielhaft eine Fehlfunktion anzeigt, und daher mit der Anzeigefarbe "rot" (in den Figuren durch Kreuz-Schraffur dargestellt) hinterleuchtet ist. Im gezeigten Beispielsfall ist das fünfte Bedienfeld ebenfalls der Funktionseinheit "Werfer" zugeordnet, jedoch der Funktion "Werfer Wasser Marsch", wobei in dem hier gezeigten Beispielsfall - wie erwähnt - eine Fehlfunktion 34 vorliegt.

Insgesamt ermöglicht die erfindungsgemäße Bedieneinrichtung 11 eine für dem Bediener oder Benutzer komfortable Menüführung bzw. Benutzerführung, da auf der Bedieneinheit 16 nur diejenigen Bedienfelder 18a-e auftauchen, die auch bedient werden sollen. Die anderen Bedienfelder sind aufgrund des "Verschwinde-Effekts", da sie nicht hinterleuchtet sind auf der Bedieneinheit 16 nicht sichtbar. Die Anzeigereihenfolge der Bedienfelder ist zweckmäßigerweise in der elektronischen Steuereinrichtung hinterlegt. Selbstverständlich ist es möglich, diese Anzeigereihenfolge zu ändern. Dadurch können mehrere sinnvolle Programmabläufe in der elektronischen Steuereinrichtung abgespeichert sein, die dann beispielsweise in Abhängigkeit des Einsatzes ausgewählt und aktivierbar sind.

## Patentansprüche

1. Bedieneinrichtung zur Bedienung von Funktionseinheiten, insbesondere auf dem Gebiet der Behörden und Organisationen mit Sicherheitsaufgaben-Fahrzeuge, mit einem Bedieneinheitträger (12), an dem eine mittels einer Hinterleuchtungseinrichtung (17) hinterleuchtbare Bedieneinheit (16) angeordnet ist, wobei die Bedieneinheit (16) mehrere Bedienfelder (18a-e) aufweist, die jeweils zu einer Bedienfeldeinheit (19a-e) gehören und jeweils einer bestimmten Funktion einer zugeordneten Funktionseinheit zugeordnet sind, wobei jede Bedienfeldeinheit (19a-e) eine durch Betätigung des zugeordneten Bedienfeldes (18a-e) betätigbare Schaltstruktur (20) aufweist, um die Funktion der zugeordneten Funktionseinheit zu aktivieren, wobei die Hinterleuchtungseinrichtung (17) mehrere jeweils zu einer der Bedienfeldeinheiten (19a-e) gehörende Hinterleuchtungseinheiten (21a-e) aufweist, durch die jeweils das zugeordnete Bedienfeld (18a-e) mit mehreren unterschiedlichen Anzeigefarben hinterleuchtbar ist, wobei die Bedienfeldeinheiten (19a-e)jeweils an eine elektronische Steuereinrichtung (22) angeschlossen sind, die derart ausgebildet ist, dass in einem unbetätigten Grundzustand wenigstens ein Bedienfeld (18a-e) mittels einer einen Bereitschaftszustand (32) des Bedienfeldes (18a-e) anzeigenden Anzeigefarbe hinterleuchtet ist und weitere Bedienfelder (18a-e) unhinterleuchtet sind, und dass das im Bereitschaftszustand (32) befindlichen Bedienfeld (18a-e) bei seiner Betätigung unter Farbumschlag mit einer anderen einen aktivierten Zustand (33) anzeigenden Anzeigefarbe hinterleuchtbar ist und zusätzlich wenigstens ein weiteres bisher unhinterleuchtetes Bedienfeld in der den Bereitschaftszustand (32) anzeigenden Anzeigefarbe oder in einer eine Fehlfunktion (34) anzeigenden weiteren Anzeigefarbe hinterleuchtet ist, **dadurch gekennzeichnet, dass** die elektronische Steuereinrichtung (22) derart ausgebildet ist, dass bei Betätigung eines im Bereitschaftszustand (32) befindlichen einer bestimmten Funktion zugeordneten Bedienfelds (18a-e) und bei Nichtauftreten einer Fehlfunktion (34) ein einzelnes bisher unhinterleuchtetes Bedienfeld (18a-e) hinterleuchtet ist, das der logisch nächsten, der Funktion des betätigten Bedienfeldes (18a-e) folgenden Funktion zugeordnet ist oder mehrere bisher unhinterleuchtete Bedienfelder (18a-e) als Auswahl hinterleuchtet sind.

2. Bedieneinrichtung nach Anspruch 1, **dadurch gekennzeichnet, dass** die elektronische Steuereinrichtung (22) derart ausgebildet ist, dass der Hinterleuchtungsvorgang der Bedienfelder (18a-e) im Bereitschaftszustand (32) pulsierend erfolgt.

3. Bedieneinrichtung nach einem der vorhergehenden Ansprüche, **dadurch gekennzeichnet, dass** die elektronische Steuereinrichtung (22) derart ausgebildet ist, dass der Hinterleuchtungsvorgang der Bedienfelder (18a-e) während der Betätigung blinkend mit einer höheren Frequenz als das Pulsieren im Bereitschaftszustand (32) oder mittels einer Dauerhinterleuchtung erfolgt.

4. Bedieneinrichtung nach Anspruch 3, **dadurch gekennzeichnet, dass** der Hinterleuchtungsvorgang zunächst blinkend erfolgt, wodurch die Anforderung der dem Bedienfeld (18a-e) zugeordneten Funktion angezeigt ist, und danach mittels Dauerhinterleuchtung erfolgt, wodurch die Ausführung der Funktion angezeigt ist.

5. Bedieneinrichtung nach einem der vorhergehenden Ansprüche, **dadurch gekennzeichnet, dass** die Funktionseinheiten ausgewählt sind aus der Gruppe bestehend aus Pumpeneinrichtung, Schaumeinrichtung, Werfereinrichtung und Beleuchtungseinrichtung.

6. Bedieneinrichtung nach einem der vorhergehenden Ansprüche, **dadurch gekennzeichnet, dass** die Hinterleuchtungseinheiten (21a-e) der Bedienfeldeinheiten (19a-e) jeweils wenigstens ein Leuchtelement (24) aufweisen, das mittels der elektronischen Steuereinrichtung (22) derart ansteuerbar ist, das Licht mit unterschiedlichen Anzeigefarben emittierbar ist, wobei vorzugsweise das wenigstens eine Leuchtelement (24) als LED-Einheit, insbesondere RGB-LED, ausgebildet ist.

7. Bedieneinrichtung nach einem der vorhergehenden Ansprüche, **dadurch gekennzeichnet, dass** die elektronische Steuereinrichtung (22) eine am Bedieneinheitträger (12) angeordnete Platine (23) aufweist, die den Bedienfeldeinheiten (19a-e) derart zugeordnet ist, dass bei Betätigung des ausgewählten Bedienfeldes (18a-e) eine Kontaktierung der Platine (23) mittels zu den jeweiligen Bedienfeldeinheiten (19a-e) gehörenden Kontaktierungsmitteln erfolgt.

8. Bedieneinrichtung nach Anspruch 7, **dadurch gekennzeichnet, dass** die Kontaktierungsmittel ein unterhalb der Bedieneinheit (16) angeordnetes Tastelement (25) aufweisen, das bei Betätigung des Bedienfeldes (18a-e) in Richtung Platine (23) verlagerbar ist und dort eine Kontaktierung auslöst.

9. Bedieneinrichtung nach Anspruch 7 oder 8, **dadurch gekennzeichnet, dass** das Tastelement (25) einen lichtdurchlässigen Tastkopf (27) und einen der Platine (23) zugewandten Tastkörper (28) aufweist wobei vorzugsweise der Tastkopf (27) wenigstens eine Streuscheibe (29a, b) aufweist, wobei vorzugsweise zwei übereinander angeordnete Streuscheiben (29a, b) vorgesehen sind, von denen insbesondere die untere weiß und die obere grau bedruckt oder grau eingefärbt ist.

10. Bedieneinrichtung nach einem der vorhergehenden Ansprüche, **dadurch gekennzeichnet, dass** mehrere Bedienfeldeinheiten (19a-e) in einem Bedienfeldeinheiten-Modul zusammengefasst sind, das als vormontierbare Baugruppe ausgebildet und am Bedieneinheitträger (12) montiert ist.

11. Bedieneinrichtung nach einem der vorhergehenden Ansprüche, **dadurch gekennzeichnet, dass** die Bedieneinheit (16) wenigstens eine lichtundurchlässige, vorzugweise schwarze oder graue Abdeckschicht aufweist.

12. Bedieneinrichtung nach Anspruch 11, **dadurch gekennzeichnet, dass** die Bedieneinheit (16) wenigstens eine transparente Trägerschicht aufweist, die auf der wenigstens einen Abdeckschicht angeordnet ist, wobei vorzugsweise die Trägerschicht als Folie ausgebildet ist.

13. Bedieneinrichtung nach Anspruch 11 oder 12, **dadurch gekennzeichnet, dass** die wenigstens eine Abdeckschicht auf die Trägerschicht aufgedruckt, auf laminiert oder als mit der Trägerschicht verbundene Folie ausgebildet ist.

14. Einsatzfahrzeug, insbesondere Feuerwehrfahrzeug, **gekennzeichnet durch** wenigstens eine Bedieneinrichtung (11) nach einem der vorhergehenden Ansprüche.

## Claims

1. Operating device for operating functional units, in particular in the field of authorities and organisations with vehicles for safety and/or security-related duties, with an operating unit medium (12) on which is arranged an operating unit (16) which can be backlit by a backlighting device (17), wherein the operating unit (16) has a plurality of operating fields (18a-e), each of which is part of an operating field unit (19a-e) and each of which is allocated a specific function of an associated functional unit, wherein each operating field unit (19a-e) has a switching structure (20) which can be activated by activating the associated operating field (18a-e) in order to activate the function of the allocated functional unit, wherein the backlighting device (17) has a plurality of backlighting devices (21a-e) each being part of one of the operating field units (19a-e), by which backlighting device units respectively the associated operating field (18a-e) can be backlit with several different display colours, wherein each of the operating field units (19a-e) is connected to an electronic control device (22), designed such that, in unactivated basic state, at least one operating field (18a-e) is backlit by means of a display colour displaying a standby state (32) of the operating field (18a-e) and further operating fields (18a-e) are not backlit, and that the operating field (18a-e) in the standby state (32) can be backlit using a different display colour displaying an activated state (33) upon activation accompanied by colour changeover, and additionally at least one further operating field, previously not backlit, is backlit in the display colour displaying the standby state (32) or in a further display colour displaying a malfunction (34), **characterised in that** the electronic control device (22) is designed such that, when an operating field (18a-e) in the standby state (32), allocated a specific function, is activated, and when no malfunction (34) occurs, a single, thus far not backlit operating field (18a-e) is backlit, the function following the function of the activated operating field (18a-e) is allocated which is logically closest, or several previously non-backlit operating fields (18a-e) are backlit as a selection.

2. Operating device according to claim 1, **characterised in that** the electronic control device (22) is designed such that the backlighting of the operating fields (18a-e) pulses in the standby state (32).

3. Operating device according to one of the preceding claims, **characterised in that** the electronic control device (22) is designed such that, during activation, the backlighting of the operating fields (18a-e) flashes at a higher frequency than the pulsing in the standby state (32) or is permanent.

4. Operating device according to claim 3, **characterised in that** the backlighting initially flashes, whereby the requirement of the function associated with the operating field (18a-e) is displayed, and is thereafter permanently backlit, whereby the implementation of the function is displayed.

5. Operating device according to one of the preceding claims, **characterised in that** the functional units are selected from the group consisting of pumping device, foam device, projecting device and lighting device.

6. Operating device according to one of the preceding claims, **characterised in that** each of the backlighting units (21a-e) of the operating field units (19a-e) has at least one lighting element (24) which can be activated by means of the electronic control device (22) such that light with different display colours can be emitted, wherein preferably the at least one lighting element (24) is designed as a LED unit, in particular a RGB LED.

7. Operating device according to one of the preceding claims, **characterised in that** the electronic control device (22) has a circuit board (23) arranged on the operating unit medium (12), which circuit board is associated with the operating field units (19a-e) such that, when the selected operating field (18a-e) is activated, the circuit board (23) is contacted by means of contacting means forming part of the respective operating field units (19a-e).

8. Operating device according to claim 7, **characterised in that** the contacting means have a stylus (25) arranged beneath the operating unit (16), which stylus can be displaced in direction of the circuit board (23) and triggers a contact there when the operating field (18a-e) is activated.

9. Operating device according to claim 7 or 8, **characterised in that** the stylus (25) has a translucent stylus head (27) and a stylus body (28) facing the circuit board (23), wherein preferably the stylus head (27) has at least one diffusion disk (29a, b), wherein preferably two diffusion disks (29a, b) arranged one on top of the other are provided, of which in particular the bottom one is white and the top one is printed grey or coloured grey.

10. Operating device according to one of the preceding claims, **characterised in that** a plurality of operating field units (19a-e) are concentrated in an operating field unit module which is designed as a preassembled module and mounted on the operating unit medium (12).

11. Operating device according to one of the preceding claims, **characterised in that** the operating unit (16) has at least one translucent, preferably black or grey, covering layer.

12. Operating device according to claim 11, **characterised in that** the operating unit (16) has at least one transparent backing layer which is arranged on the at least one covering layer, wherein preferably the backing layer is designed as a film.

13. Operating device according to claim 11 or 12, **characterised in that** the at least one covering layer is pressed onto, laminated onto, or designed as a film connected to the backing layer.

14. Emergency vehicle, in particular fire engine, **characterised by** at least one operating unit (11) according to one of the preceding claims.

## Revendications

1. Dispositif de commande pour la commande d'unités fonctionnelles, en particulier dans le domaine des autorités et des organismes avec des véhicules assurant la sécurité, avec un support d'unité de commande (12), au niveau duquel une unité de commande (16) rétroéclairable au moyen d'un dispositif de rétroéclairage (17) est agencée, dans lequel l'unité de commande (16) présente plusieurs panneaux de commande (18a-e) qui appartiennent respectivement à une unité de panneau de commande (19a-e) et sont associés respectivement à une fonction déterminée d'une unité fonctionnelle associée, dans lequel chaque unité de panneau de commande (19a-e) présente une structure de commutation (20) actionnable par actionnement du panneau de commande (18a-e) associé afin d'activer la fonction de l'unité fonctionnelle associée, dans lequel le dispositif de rétroéclairage (17) présente plusieurs unités de rétroéclairage (21a-e) appartenant respectivement à une des unités de panneau de commande (19a-e), par lesquelles respectivement le panneau de commande (18a-e) associé peut être rétroéclairé avec plusieurs couleurs d'affichage différentes, dans lequel les unités de panneau de commande (19a-e) sont raccordées respectivement à un dispositif de commande (22) électronique qui est réalisé de telle manière que dans un état de base non actionné, au moins un panneau de commande (18a-e) soit rétroéclairé au moyen d'une couleur d'affichage affichant un état de veille (32) du panneau de commande (18a-e) et d'autres panneaux de commande (18a-e) ne soient pas rétroéclairés, et en ce que le panneau de commande (18a-e) se trouvant dans l'état de veille (32) peut être rétroéclairé lors de son actionnement par changement de couleur avec une autre couleur d'affichage affichant un état activé (33) et en outre au moins un autre panneau de commande non rétroéclairé jusqu'à présent est rétroéclairé dans la couleur d'affichage affichant l'état de veille (32) ou dans une autre couleur d'affichage affichant un dysfonctionnement (34), **caractérisé en ce que** le dispositif de commande (22) électronique est réalisé de telle manière que lors de l'actionnement d'un panneau de commande (18a-e) associé à une fonction déterminée, se trouvant dans l'état de veille (32) et en l'absence de dysfonctionnement (34), un panneau de commande (18a-e) individuel non rétroéclairé jusqu'à présent est rétroéclairé, lequel est associé à la fonction suivante de manière logique, suivant la fonction du panneau de commande (18a-e) actionné ou plusieurs panneaux de commande (18a-e) non rétroéclairés jusqu'à présent sont rétroéclairés en tant que sélection.

2. Dispositif de commande selon la revendication 1, **caractérisé en ce que** le dispositif de commande (22) électronique est réalisé de telle manière que le processus de rétroéclairage des panneaux de commande (18a-e) soit effectué de manière pulsée dans l'état de veille (32).

3. Dispositif de commande selon l'une quelconque des revendications précédentes, **caractérisé en ce que** le dispositif de commande (22) électronique est réalisé de telle manière que le processus de rétroéclairage des panneaux de commande (18a-e) soit effectué pendant l'actionnement de manière clignotante avec une fréquence plus élevée que la pulsation dans l'état de veille (32) ou au moyen d'un rétroéclairage durable.

4. Dispositif de commande selon la revendication 3, **caractérisé en ce que** le processus de rétroéclairage est tout d'abord effectué de manière clignotante, par quoi la demande de la fonction associée au panneau de commande (18a-e) est affichée, et est ensuite effectué au moyen du rétroéclairage durable, par quoi la réalisation de la fonction est affichée.

5. Dispositif de commande selon l'une quelconque des revendications précédentes, **caractérisé en ce que** les unités fonctionnelles sont sélectionnées à partir du groupe composé du dispositif de pompe, dispositif de mousse, dispositif de lanceur et dispositif d'éclairage.

6. Dispositif de commande selon l'une quelconque des revendications précédentes, **caractérisé en ce que** les unités de rétroéclairage (21a-e) des unités de panneau de commande (19a-e) présentent respectivement au moins un élément d'éclairage (24) qui peut être commandé au moyen du dispositif de commande (22) électronique de telle manière que la lumière puisse être émise avec différentes couleurs d'affichage, dans lequel l'au moins un élément d'éclairage (24) est de préférence réalisé en tant qu'unité DEL, en particulier DEL RVB.

7. Dispositif de commande selon l'une quelconque des revendications précédentes, **caractérisé en ce que** le dispositif de commande (22) électronique présente une platine (23) agencée au niveau du support d'unité de commande (12) qui est associée aux unités de panneau de commande (19a-e) de telle manière que lors de l'actionnement du panneau de commande (18a-e) sélectionné, un établissement de contact de la platine (23) soit effectué à l'aide des moyens d'établissement de contact appartenant aux unités de panneau de commande (19a-e) respectives.

8. Dispositif de commande selon la revendication 7, **caractérisé en ce que** les moyens d'établissement de contact présentent un élément palpeur (25) agencé en dessous de l'unité de commande (16) qui peut être déplacé lors de l'actionnement du panneau de commande (18a-e) en direction de la platine (23) et y déclenche un établissement de contact.

9. Dispositif de commande selon la revendication 7 ou 8, **caractérisé en ce que** l'élément palpeur (25) présente une tête de palpage (27) perméable à la lumière et un corps de palpage (28) tourné vers la platine (23), dans lequel de préférence, la tête de palpage (27) présente au moins un disque de diffusion (29a, b), dans lequel de préférence, deux disques de diffusion (29a, b) agencés l'un au-dessus de l'autre sont prévus, dont en particulier le disque inférieur est imprimé en blanc et le disque supérieur est imprimé en gris ou est coloré en gris.

10. Dispositif de commande selon l'une quelconque des revendications précédentes, **caractérisé en ce que** plusieurs unités de panneau de commande (19a-e) sont réunies dans un module d'unité de panneau de commande qui est réalisé en tant qu'ensemble prémontable et est monté au niveau du support d'unité de commande (12).

11. Dispositif de commande selon l'une quelconque des revendications précédentes, **caractérisé en ce que** l'unité de commande (16) présente au moins une couche de recouvrement imperméable à la lumière, de préférence noire ou grise.

12. Dispositif de commande selon la revendication 11, **caractérisé en ce que** l'unité de commande (16) présente au moins une couche de support transparente qui est agencée sur l'au moins une couche de recouvrement, dans lequel la couche de support est de préférence réalisée en tant que film.

13. Dispositif de commande selon la revendication 11 ou 12, **caractérisé en ce que** l'au moins une couche de recouvrement est imprimée, laminée sur la couche de support ou est réalisée en tant que film relié à la couche de support.

14. Véhicule d'intervention, en particulier véhicule de pompiers, **caractérisé par** au moins un dispositif de commande (11) selon l'une quelconque des revendications précédentes.
